# EUROPEAN PATENT APPLICATION

(11) **EP 4 466 991 A2**
(43) Date of publication of application: **27.11.2024**
(21) Application number: 24206255.2
(22) Date of filing: 16.08.2022
(51) Int. Cl.: A01K 85/01, A01K 85/00

(54) **LURE FOR FISHING**

(30) Priority: 25.08.2021 JP 2021137315; 29.03.2022 JP 2022054003
(62) Divisional of application: 22190593.8
(71) Applicant: Globeride, Inc., Higashikurume-shi, Tokyo 203-8511 (JP)
(72) Inventor: YAGI, Hiroshi, Higashikurume-shi, 203-8511 (JP)
(74) Representative: Boult Wade Tennant LLP

(57) **Abstract**

A lure (1) for fishing includes a body (2) that includes a cavity (11) inside the body, the cavity being visible from outside, a plurality of reflecting surfaces (4) or reflectors (7) that can specularly reflect light from the outside is provided on at least any of an outer face of the body, an inner face of the body, and an inside of the cavity, and the light from the outside is specularly reflected plural times.

## Description

### BACKGROUND OF THE INVENTION

### 1. TECHNICAL FIELD

The present invention relates to a lure for fishing.

### 2. DESCRIPTION OF THE RELATED ART

Conventionally, in lure fishing, artificial bait (a lure) obtained by imitating bait such as a small fish is used in order to catch fish eaters. As such a lure, various types of lures, such as bait logs, spoons, plugs, spinners, jigs, or plastic lures, are known.

As one example of such a lure, JP H11-75628 A discloses a fish attracting tool, such as artificial bait, that is used in fishing, and in particular, a fish attracting tool in which an object that reflects rays of light is sealed together with liquid in a body, and complicated reflected light is generated according to a movement of a reflector so that a catch can be increased.

In addition, JP H09-154438 A discloses a color-developing lure that has been obtained by sticking a pair of halved lure members including a transparent or translucent material at the spacing that makes an interior hollow, and in which the halved lure member includes an irregular reflection layer including a large number of recesses and protrusions on an inner face, a reflection film has been formed on a surface of the irregular reflection layer, and an outer face is a smooth layer.

### RELEVANT REFERENCES

### LIST OF RELEVANT PATENT LITERATURE

Patent Literature 1: Japanese Application Publication No. H11-75628
Patent Literature 2: Japanese Application Publication No. H9-154438

### SUMMARY OF THE INVENTION

However, in the fish attracting tool, as disclosed in JP H11-75628 A, light can be reflected, but reflected light is weak, or in the first place, the reflected light does not reach fish eaters depending on an angle of light from the outside that is applied to a small piece. This has caused a problem in which a fish attracting effect is not necessarily enhanced. In addition, the color-developing lure, as disclosed in JP H09-154438 A, only causes irregular reflection, and fails to form strong reflected light due to diffused reflected light. As a result, the color-developing lure is hard to be noticed by fish eaters, and this has caused a problem in which the fish attracting effect is not necessarily enhanced. On the other hand, it is known that fish such as sardines camouflage themselves by performing reflection that is close to specular reflection in order to not be discovered from the sky by birds or the like, and strong reflected light in this reflection that is close to specular reflection attracts fish eaters depending on a direction in which the strong reflected light is reflected. However, both the fish attracting tool disclosed in JP H11-75628 A and the lure disclosed in JP H09-154438 A have failed to achieve the above.

It is an object of an embodiment of the present invention to provide a lure that includes an attraction part that is capable of more reliably and intensely attracting fish eaters, by reducing attenuation in reflection of external light to enable reflection to be performed at a higher light luminance plural times, and enable reflected light to be formed in various directions. Other objects of the embodiment of the present invention will become apparent by referring to the entirety hereof.

A lure for fishing according to an embodiment of the present invention includes a main body portion (main body) that includes a cavity inside the main body portion, the cavity is visible from outside, a plurality of reflecting surfaces or a plurality of reflectors that specularly reflects light from the outside is provided on at least any of an outer face of the main body portion, an inner face of the main body portion, and an inside of the cavity, and the light from the outside is specularly reflected plural times.

In the lure for fishing according to the embodiment of the present invention, each of the plurality of reflecting surfaces is formed in a circular shape, a polygonal shape, an arc shape, or a scaly shape. In addition, in the lure for fishing according to the embodiment of the present invention, at least some of the plurality of reflectors are formed in a cylindrical shape, a wave shape, a polygonal shape, a polyhedral shape, a spherical shape, or a tile shape.

In the lure for fishing according to the embodiment of the present invention, the main body portion is formed to diffuse and transmit the light from the outside. In addition, in the lure for fishing according to the embodiment of the present invention, the light from the outside or reflected light to the outside develops color at a time of transmission through the main body portion.

In the lure for fishing according to the embodiment of the present invention, in a case where the plurality of reflecting surfaces or the plurality of reflectors is provided on the inside of the cavity, one or more of the plurality of reflecting surfaces or the plurality of reflectors are directly or indirectly supported by a portion of the main body portion (main body). In addition, in the lure for fishing according to the embodiment of the present invention, one or more of the plurality of reflecting surfaces or the plurality of reflectors are formed integrally with the main body portion.

In the lure for fishing according to the embodiment of the present invention, the main body portion is formed to diffuse and transmit the light from the outside. In addition, in the lure for fishing according to the embodiment of the present invention, in a case where the plurality of reflecting surfaces or the plurality of reflectors is provided on the inner face of the main body portion, one or more of the plurality of reflecting surfaces or the plurality of reflectors are formed by using vapor deposition coating, a holographic film, a hologram sheet, metal adhesion, resin adhesion, or glass-sheet adhesion.

In the lure for fishing according to the embodiment of the present invention, the main body portion is formed by using resin or metal. In addition, in the lure for fishing according to the embodiment of the present invention, in a case where the plurality of reflecting surfaces or the plurality of reflectors is provided, each of the plurality of reflecting surfaces or the plurality of reflectors has an identical shape or a different shape.

In the lure for fishing according to the embodiment of the present invention, in a case where the plurality of reflecting surfaces or the plurality of reflectors is provided on the inside of the cavity, a reflecting member including one or more of the plurality of reflecting surfaces or the plurality of reflectors is provided, the reflecting member is supported by a support member in which one end is supported by the portion of the main body portion (main body), and the support member supports the reflecting member in a center position of the reflecting member or in a position that deviates from the center position, when viewed in a cross section that is perpendicular to a direction in which the reflecting member extends.

In the lure for fishing according to the embodiment of the present invention, in a case where the plurality of reflecting surfaces or the plurality of reflectors is provided on the inside of the cavity, a reflecting member including one or more of the plurality of reflecting surfaces or the plurality of reflectors is provided, the reflecting member is supported by a support member in which one end is supported by the portion of the main body portion (main body), and the reflecting member is supported by the support member by using a ball bearing or a spring member.

A lure for fishing according to an embodiment of the present invention is formed by using resin or metal, a plurality of reflecting surfaces or a plurality of reflectors that specularly reflects light from an outside is provided on an outer face of the lure, and the light from the outside is specularly reflected plural times. In addition, the lure for fishing according to the embodiment of the present invention is a jig or a spoon. The lure for fishing according to the embodiment of the present invention is formed to be solid. Stated another way, the lure for fishing is formed to not include a cavity part.

According to various embodiments of the present invention, a lure can be provided that includes an attraction part that is capable of more reliably and intensely attracting fish eaters, by reducing attenuation in reflection of external light to enable reflection to be performed at a higher light luminance plural times, and enable reflected light to be formed in various directions.

### BRIEF DESCRIPTION OF THE DRAWINGS

FIG. 1 is a schematic diagram of a lure for fishing according to an embodiment of the present invention;
FIG. 2 is a sectional view of the lure for fishing according to the embodiment of the present invention;
FIG. 3 is a sectional view of the lure for fishing according to the embodiment of the present invention;
FIG. 4 is a sectional view of the lure for fishing according to the embodiment of the present invention;
FIG. 5 is a diagram explaining a reflector of the lure for fishing according to the embodiment of the present invention;
FIGS. 6A to 6E are diagrams explaining a reflecting surface of the lure for fishing according to the embodiment of the present invention;
FIGS. 7A to 7E are diagrams explaining a reflector of the lure for fishing according to the embodiment of the present invention;
FIG. 8 is a diagram illustrating a support structure of a reflecting member of the lure for fishing according to the embodiment of the present invention; and
FIG. 9 is a diagram illustrating a support structure of a reflecting member of the lure for fishing according to the embodiment of the present invention.

### DETAILED DESCRIPTION

Various embodiments of the present invention are described below with appropriate reference to the drawings. Note that a common component in the drawings is denoted by the same reference sign.

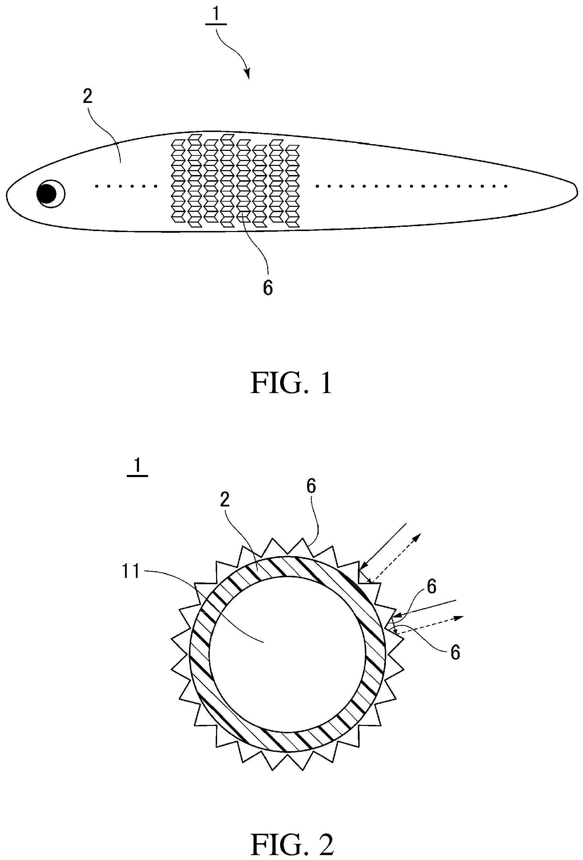

A lure 1 for fishing according to an embodiment of the present invention is described with reference to FIGS. 1, 3, and 5. As illustrated in FIGS. 1, 3, and 5, the lure 1 for fishing according to the embodiment of the present invention includes a main body portion (main body) 2 that includes a cavity 11 inside the main body portion 2. The cavity 11 is visible from outside (or can be visually recognized from outside). A plurality of reflecting members (reflecting members) 4 (in the illustrated example, a plurality of reflecting surfaces (reflecting surfaces) 6) that can specularly reflect light from the outside is provided on at least any of an outer face of the main body portion 2, an inner face of the main body portion 2, and an inside of the cavity 11 (in the illustrated example, the inner face of the main body portion 2). The light from the outside is specularly reflected plural times (at least two times or more) (in the illustrated example, specular reflection is performed two times). As described above, specular reflection is performed plural times, and therefore a broader range of incident light can be caught and reflected, and reflected light can be more reliably transmitted in a desired direction. Note that in a case where the plurality of reflecting members 4 (for example, the plurality of reflecting surfaces 6) is provided, the plurality of reflecting members 4 (the plurality of reflecting surfaces 6) and the main body portion 2 may be integrally or separately provided. Even in a case where the plurality of reflecting members 4 (the plurality of reflecting surfaces 6) and the main body portion 2 are separately provided, some or all of the plurality of reflecting members 4 (the plurality of reflecting surfaces 6) may be provided to be in contact with the main body portion 2 (the similar is applied to the entirety hereof). Here, the reflecting member 4 performs specular reflection, and therefore a reflecting surface of the reflecting member 4 has been formed on a plane that satisfies the law of reflection (in reflection, an angle of incidence and an angle of reflection are equal to each other, and have signs reverse to each other) (hereinafter, the similar is applied). In addition, the reflecting member 4 includes the reflecting surface 6 or the reflector 7, but other aspects are also conceivable (hereinafter, the similar is applied). Here, external light is made incident from various directions, and a principal conceivable example of the external light is sunlight that arrives underwater from above the surface of the water. Such external light (incident light) is made incident in an upward/downward (vertical) direction or in an oblique direction from above the surface of the water toward a lure in the water. The lure attracts fish eaters, and therefore it is desirable that specular reflection be performed in a roughly leftward/rightward (lateral) direction or an oblique lateral direction of the lure. In this point, the lure has been designed to perform a predetermined movement in practical fishing. In a case where a reflecting member that causes specular reflection is disposed, the reflecting member can be disposed in an appropriate position in advance consideration of an expected movement of the lure (also referred to as a lure action), but this does not intend limitations to a specified direction or orientation. Note that it can be said that if a large number of reflecting surfaces are provided in order to cause specular reflection in a multi-direction, an efficiency of reflecting incident light within an appropriate range (in an appropriate direction) increases. However, it is to be noted that if the lure action is rolling, even a single reflecting member can effectively reflect light within an appropriate range (in an appropriate direction).

According to the lure 1 for fishing according to the embodiment of the present invention, a lure can be provided that includes an attraction part that is capable of more reliably and intensely attracting fish eaters, by reducing attenuation in reflection of external light to enable reflection to be performed at a higher light luminance plural times, and enable reflected light to be formed in various directions. Here, specular reflection is defined as "reflection that satisfies the law of reflection (in reflection, an angle of incidence and an angle of reflection are equal to each other, and have signs reverse to each other)", and the luminance of reflected light is higher than luminance in normal diffuse reflection. Therefore, it is known that specular reflection of external light enables the strength of reflected light to be significantly increased, and as a result, the reflected light can be transmitted far away (hereinafter, the similar is applied). Here, the reflection luminances of specular reflection and diffuse reflection change according to various conditions, but under the same conditions, the luminance of diffuse reflection is about 1/5 or less the luminance of specular reflection. In the present invention, it is to be noted that "specular reflection" does not only include ideal specular reflection, but also includes reflection having a luminance that is 40% or more of the luminance of ideal specular reflection (herein referred to as quasi specular reflection).

Next, the lure 1 for fishing according to the embodiment of the present invention is described with reference to FIGS. 1 and 2. As illustrated in FIGS. 1 and 2, the lure 1 for fishing according to the embodiment of the present invention includes the main body portion 2 that includes the cavity 11 inside the main body portion 2. The cavity 11 is visible from outside. One or more reflecting members 4 (in the illustrated example, one or more reflecting surfaces 6) that can specularly reflect light from the outside are provided on at least any of the outer face of the main body portion 2, the inner face of the main body portion 2, and the inside of the cavity 11 (in the illustrated example, the outer face of the main body portion 2). The light from the outside is specularly reflected plural times (at least two times or more) (in the illustrated example, specular reflection is performed two times). As described above, specular reflection is performed plural times, and therefore a broader range of incident light can be caught and reflected, and reflected light can be more reliably transmitted in a desired direction. Note that in a case where the plurality of reflecting members 4 (for example, the plurality of reflecting surfaces 6) is provided, the plurality of reflecting members 4 (the plurality of reflecting surfaces 6) and the main body portion 2 may be integrally or separately provided. Even in a case where the plurality of reflecting members 4 (the plurality of reflecting surfaces 6) and the main body portion 2 are separately provided, some or all of the plurality of reflecting members 4 (the plurality of reflecting surfaces 6) may be provided to be in contact with the main body portion 2 (the similar is applied to the entirety hereof). Here, the reflecting member 4 performs specular reflection, as described above, and therefore a reflecting surface of the reflecting member 4 has been formed on a plane that satisfies the law of reflection (in reflection, an angle of incidence and an angle of reflection are equal to each other, and have signs reverse to each other) (hereinafter, the similar is applied).

According to the lure 1 for fishing according to the embodiment of the present invention, a lure can be provided that includes an attraction part that is capable of more reliably and intensely attracting fish eaters, by reducing attenuation in reflection of external light to enable reflection to be performed at a higher light luminance plural times, and enable reflected light to be formed in various directions. Here, specular reflection is defined as "reflection that satisfies the law of reflection (in reflection, an angle of incidence and an angle of reflection are equal to each other, and have signs reverse to each other)", and the luminance of reflected light is higher than luminance in normal diffuse reflection. Therefore, it is known that specular reflection of external light enables the strength of reflected light to be significantly increased, and as a result, the reflected light can be transmitted far away (hereinafter, the similar is applied). Here, the reflection luminances of specular reflection and diffuse reflection change according to various conditions, but under the same conditions, the luminance of diffuse reflection is about 1/5 or less the luminance of specular reflection. In the present invention, it is to be noted that "specular reflection" does not only include ideal specular reflection, but also includes reflection having a luminance that is 40% or more of the luminance of ideal specular reflection (herein referred to as quasi specular reflection).

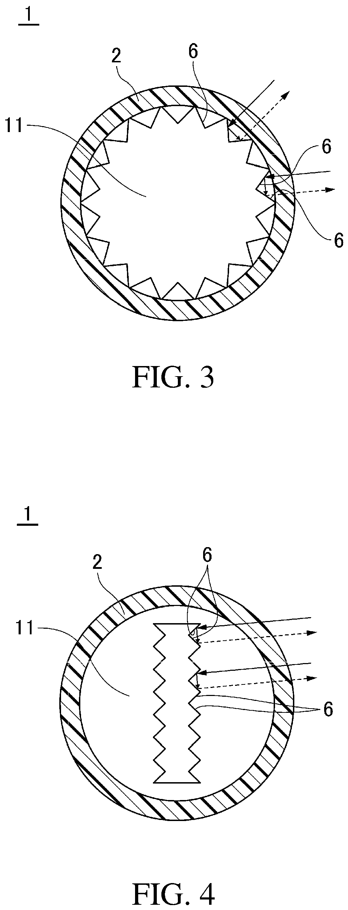

Next, the lure 1 for fishing according to the embodiment of the present invention is described with reference to FIG. 4. As illustrated in FIG. 4, the lure 1 for fishing according to the embodiment of the present invention includes the main body portion 2 that includes the cavity 11 inside the main body portion 2. The cavity 11 is visible from outside. One or more reflecting members 4 (one or more reflecting surfaces 6) that can specularly reflect light from the outside are provided on at least any of the outer face of the main body portion 2, the inner face of the main body portion 2, and the inside of the cavity 11 (in the illustrated example, the inside of the cavity 11). The light from the outside is specularly reflected plural times (at least two times or more) (in the illustrated example, specular reflection is performed two times). As described above, specular reflection is performed plural times, and therefore a broader range of incident light can be caught and reflected, and reflected light can be more reliably transmitted in a desired direction. Note that in a case where the plurality of reflecting members 4 (for example, the plurality of reflecting surfaces 6) is provided, the plurality of reflecting members 4 (the plurality of reflecting surfaces 6) and the main body portion 2 may be integrally or separately provided. Even in a case where the reflecting of reflecting members 4 (the plurality of reflecting surfaces 6) and the main body portion 2 are separately provided, some or all of the plurality of reflecting members 4 (the plurality of reflecting surfaces 6) may be provided to be in contact with the main body portion 2 (the similar is applied to the entirety hereof). Here, the reflecting member 4 performs specular reflection, as described above, and therefore a reflecting surface of the reflecting member 4 has been formed on a plane that satisfies the law of reflection (in reflection, an angle of incidence and an angle of reflection are equal to each other, and have signs reverse to each other) (hereinafter, the similar is applied).

According to the lure 1 for fishing according to the embodiment of the present invention, a lure can be provided that includes an attraction part that is capable of more reliably and intensely attracting fish eaters, by reducing attenuation in reflection of external light to enable reflected light to be formed at a higher light luminance in various directions. Here, specular reflection is defined as "reflection that satisfies the law of reflection (in reflection, an angle of incidence and an angle of reflection are equal to each other, and have signs reverse to each other)", and the luminance of reflected light is higher than luminance in normal diffuse reflection. Therefore, it is known that specular reflection of external light enables the strength of reflected light to be significantly increased, and as a result, the reflected light can be transmitted far away (hereinafter, the similar is applied). The reflection luminances of specular reflection and diffuse reflection change according to various conditions, but under the same conditions, the luminance of diffuse reflection is about 1/5 or less the luminance of specular reflection. In the present invention, it is to be noted that "specular reflection" does not only include ideal specular reflection, but also includes reflection having a luminance that is 40% or more of the luminance of ideal specular reflection (herein referred to as quasi specular reflection).

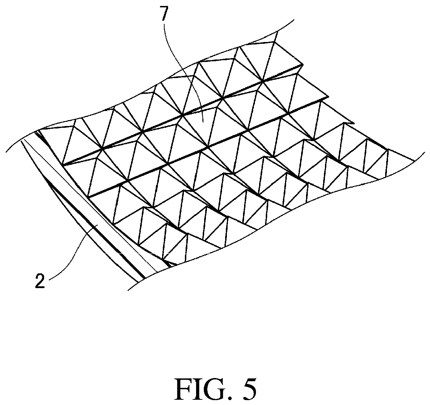

Next, the lure 1 for fishing according to the embodiment of the present invention is described with reference to FIG. 5. FIG. 5 illustrates some of a plurality of reflectors in the lure 1, and the lure 1 for fishing according to the embodiment of the present invention includes the main body portion 2 that includes the cavity 11 inside the main body portion 2. The cavity 11 is visible from outside. One or more reflecting members 4 (in the illustrated example, a plurality of quadrangular pyramid prisms each serving as a reflector 7) that can specularly reflect light from the outside are provided on at least any of the outer face of the main body portion 2, the inner face of the main body portion 2, and the inside of the cavity 11 (in the illustrated example, the inner face of the main body portion ). The light from the outside is specularly reflected plural times (at least two times or more) (in the illustrated example, specular reflection is performed two times). As described above, specular reflection is performed plural times, and therefore a broader range of incident light can be caught and reflected, and reflected light can be more reliably transmitted in a desired direction. Note that in a case where the plurality of reflecting members 4 (for example, the plurality of reflecting surfaces 6) is provided, the plurality of reflecting members 4 (the plurality of reflecting surfaces 6) and the main body portion 2 may be integrally or separately provided. Even in a case where the plurality of reflecting members 4 (the plurality of reflecting surfaces 6) and the main body portion 2 are separately provided, some or all of the plurality of reflecting members 4 (the plurality of reflecting surfaces 6) may be provided to be in contact with the main body portion 2 (the similar is applied to the entirety hereof). Here, the reflecting member 4 performs specular reflection, as described above, and therefore a reflecting surface of the reflecting member 4 has been formed on a plane that satisfies the law of reflection (in reflection, an angle of incidence and an angle of reflection are equal to each other, and have signs reverse to each other) (hereinafter, the similar is applied).

According to the lure 1 for fishing according to the embodiment of the present invention, a lure can be provided that includes an attraction part that is capable of more reliably and intensely attracting fish eaters, by reducing attenuation in reflection of external light to enable reflection to be performed at a higher light luminance plural times, and enable reflected light to be formed in various directions. Here, specular reflection is defined as "reflection that satisfies the law of reflection (in reflection, an angle of incidence and an angle of reflection are equal to each other, and have signs reverse to each other)", and the luminance of reflected light is higher than luminance in normal diffuse reflection. Therefore, it is known that specular reflection of external light enables the strength of reflected light to be significantly increased, and as a result, the reflected light can be transmitted far away (hereinafter, the similar is applied). Here, the reflection luminances of specular reflection and diffuse reflection change according to various conditions, but under the same conditions, the luminance of diffuse reflection is about 1/5 or less the luminance of specular reflection. In the present invention, it is to be noted that "specular reflection" does not only include ideal specular reflection, but also includes reflection having a luminance that is 40% or more of the luminance of ideal specular reflection (herein referred to as quasi specular reflection).

In addition, the plurality of reflecting members 4 (the plurality of reflecting surfaces 6 or reflectors 7) that can specularly reflect light from the outside may be provided on the outer face of the main body portion 2 and the inner face of the main body portion 2, on the outer face of the main body portion 2 and the inside of the cavity 11, or on the inner face of the main body portion 2 and the inside of the cavity 11. In addition, the one or more reflecting members 4 (the one or more reflecting surfaces 6 or reflectors 7) that can specularly reflect light from the outside may be provided on the outer face of the main body portion 2, the inner face of the main body portion 2, and the inside of the cavity 11. Here, in a case where the reflecting member 4 (the reflecting surface 6) is provided on the inside of the cavity 11, in a process in which light from the outside is specularly reflected by the reflecting member 4 (the reflecting surface 6) that is provided on the inside of the cavity 11, a portion of the light from the outside is transmitted through the main body portion 2. Diffuse transmission is performed when the light from the outside reaches the inside of the cavity 11, and therefore light that enters the inside of the cavity 11 is diffused in various directions. A large portion of such incident light is specularly reflected by the reflecting member 4 (the reflecting surface 6) on the inside of the cavity 11, and therefore attenuation in reflection of relatively weak incident light is also reduced to enable reflection to be reliably performed at a high light luminance, and enable reflected light to be reflected in a broader range of direction. In addition, in a process in which such transmitted light enters an inside of an object to be transmitted through or reflected light is emitted to the outside, colored light, as described later, can be formed. Light reflected as described above serves as color-developing reflected light, causes a reduction in attenuation in reflection, and can be reliably reflected at a high light luminance.

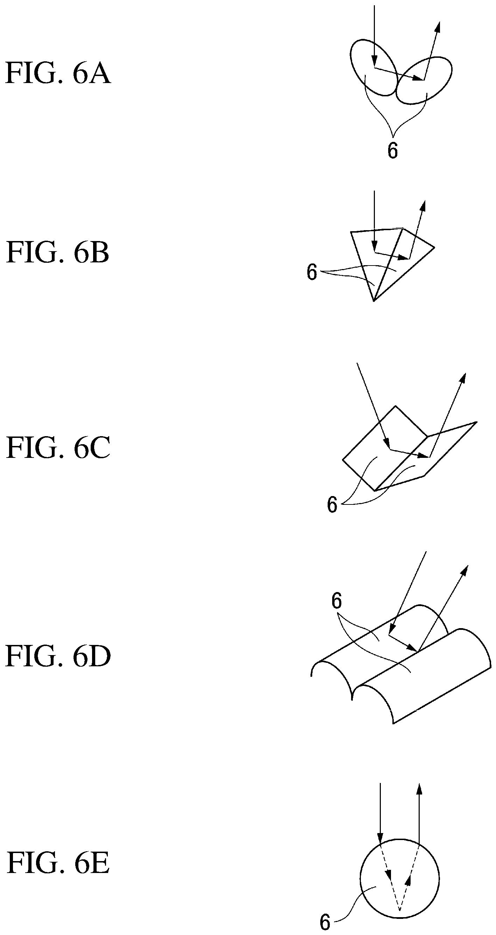

Next, as illustrated in FIGS. 6A to 6E, in the lure 1 for fishing according to the embodiment of the present invention, the reflecting surfaces 6 are formed into a plurality of circles or polygons including triangles, quadrangles, pentagons, hexagons, and the like that is different in an angle (in the cases of FIGS. 6A, 6B, and 6C), in an arc shape, or in a scaly shape (a shape imitating fish scales). Further, in the lure for fishing according to the embodiment of the present invention, the reflecting surfaces are formed into a plurality of curved surfaces (in the case of FIG. 6D) or in a spherical shape (in the case of FIG. 6E). This enables specular reflection to be performed plural times (two times or more).

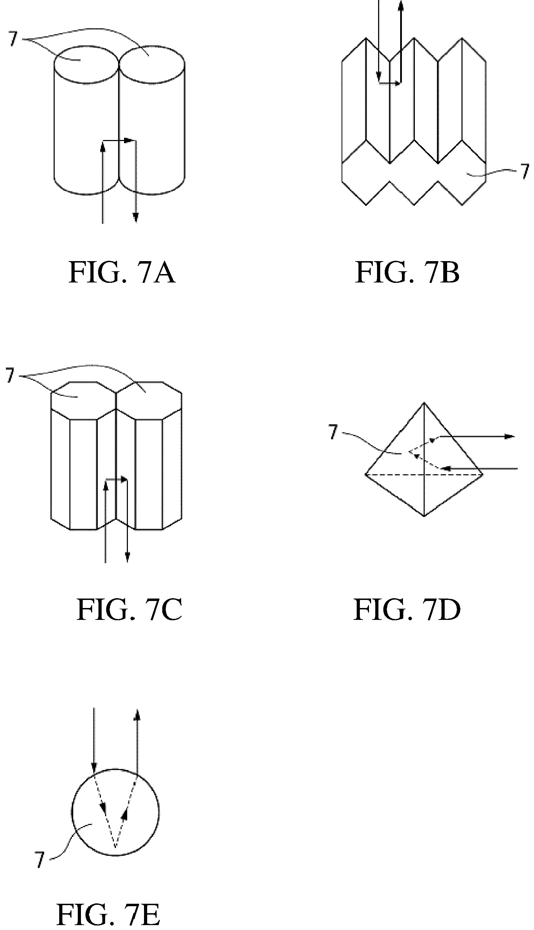

Next, as illustrated in FIGS. 7A to 7E, in the lure 1 for fishing according to the embodiment of the present invention, at least some of the reflectors 7 are formed into cylinders (in the case of FIG. 7A), wave shapes (in the case of FIG. 7B), polygons such as polygonal prisms or polygonal pyramids (in the case of FIG. 7C), polyhedrons (in the case of FIG. 7D), spheres (in the case of FIG. 7E), tile shapes (saw-tooth shapes), or a tile-shaped laminate. By doing this, incident light from more directions can be specularly reflected. In addition, specular reflection is performed plural times in such a way that realistic reflected light is emitted, as bait fish do, and this enables effective appealing.

In the lure 1 for fishing according to the embodiment of the present invention, in a case where one or more reflecting surfaces 6 or reflectors 7 are provided on the inside of the cavity 11, the one or more reflecting surfaces 6 or reflectors 7 are directly or indirectly supported by a portion of the main body portion 2.

In the lure 1 for fishing according to the embodiment of the present invention, the main body portion 2 is formed in such a way that light from the outside can be diffused and transmitted. By doing this, specular reflection can be simultaneously performed plural times. In addition, in the lure for fishing according to the embodiment of the present invention, the light from the outside or reflected light to the outside develops color at a time of transmission through the main body portion. In this case, in order to cause transmitted light to develop color, the main body portion is formed by using transparent ABS resin or acrylic resin that has been colored in a color to be developed within a range in which light can be transmitted, but this is not restrictive. As described above, in a case where it is desired that colored reflected light be generated, transmitted light that is transmitted through the main body portion can be utilized.

In the lure 1 for fishing according to the embodiment of the present invention, in a case where one or more reflecting surfaces 6 or reflectors 7 are provided on the inner face of the main body portion 2, in the one or more reflecting surfaces 6 or reflectors 7, a specular surface is formed by using, for example, vapor deposition coating, a holographic film, a hologram sheet, metal adhesion, resin adhesion, or glass-sheet adhesion, but these are not restrictive. By doing this, reflection efficiency is improved, for example, in use in a portion, such as the abdomen (a lower face) of the lure, that light from above the surface of the water easily enters, and stronger reflected light can be emitted, or weak incident light can also be reliably reflected.

In the lure 1 for fishing according to the embodiment of the present invention, the main body portion 2 is formed by using resin (for example, ABS, acryl, or the like) or metal (for example, zinc, lead, tungsten, or the like). In addition, a portion of the main body portion 2 may be formed by using at least any of resin (for example, ABS, acryl, or the like) and metal (for example, zinc, lead, tungsten, or the like). Further, in the lure 1 for fishing according to the embodiment of the present invention, in a case where a plurality of reflecting surfaces 6 or reflectors 7 is provided, the respective reflecting surfaces 6 or reflectors 7 may have the same shape or shapes different from each other.

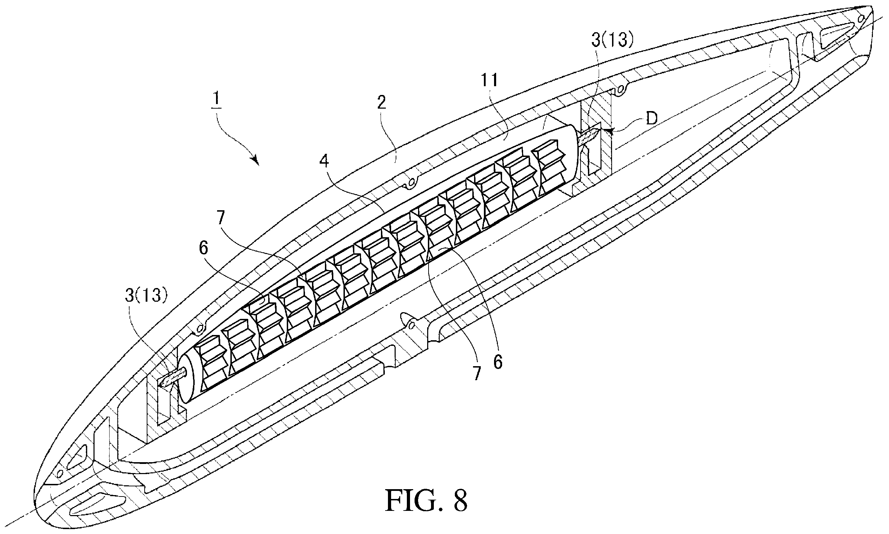

Next, the lure 1 for fishing according to the embodiment of the present invention is described with reference to FIG. 8. As illustrated in FIG. 8, in the lure 1 for fishing according to the embodiment of the present invention, in a case where one or more reflecting surfaces 6 or reflectors 7 (in the illustrated example, one reflecting surface 6) are provided on the inside of the cavity 11, a reflecting member 4 including the one or more reflecting surfaces 6 or reflectors 7 (in the illustrated example, one reflecting surface 6) is provided. The reflecting member 4 is supported by a support member 3 in which one end 13 is supported by a portion of the main body portion 2. The support member 3 supports the reflecting member 4 in a center position of the reflecting member 4 or in a position that deviates from the center position (in the illustrated example, in the position that deviates from the center position), when viewed in a cross section that is perpendicular to a direction in which the reflecting member 4 extends.

As described above, a position where the support member 3 is supported is caused to deviate from the center position of the reflecting member 4. Therefore, by swinging the reflecting member 4, the reflecting member 4 that performs specular reflection can strongly reflect light received from the outside, in various directions, and reflected light reliably reaches fish eaters. This enables an attracting effect to be significantly enhanced.

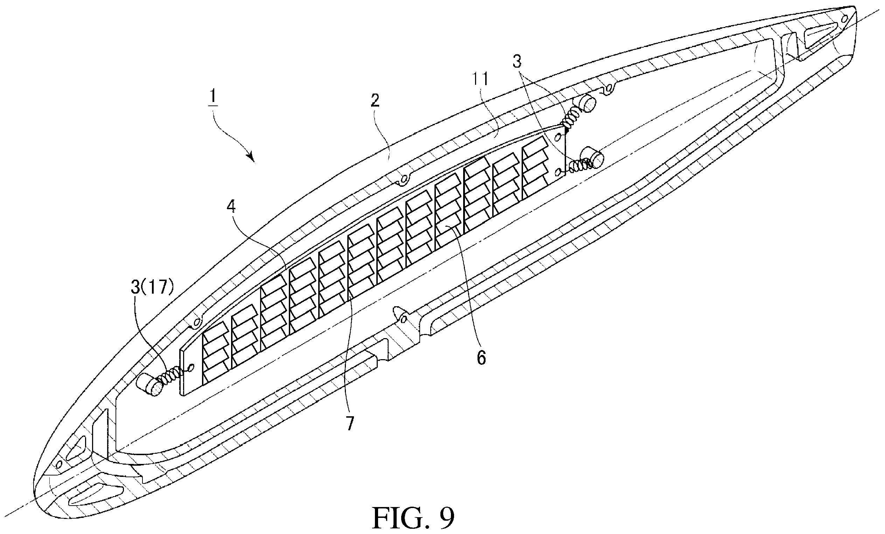

Next, the lure 1 for fishing according to the embodiment of the present invention is described with reference to FIG. 9. As illustrated in FIG. 9, in the lure 1 for fishing according to the embodiment of the present invention, in a case where one or more reflecting surfaces 6 or reflectors 7 are provided on the inside of the cavity 11, a reflecting member 4 including the one or more reflecting surfaces 6 or reflectors 7 is provided. The reflecting member 4 is supported by the support member 3 in which the one end 13 is supported by a portion of the main body portion 2, and the reflecting member 4 is supported by the support member 3, by using a ball bearing or a spring member (in the illustrated example, a spring member 17).

By doing this, the reflecting member 4 is supported, for example, by the spring member 17. Therefore, by swinging the reflecting member 4, the reflecting member 4 that performs specular reflection can strongly reflect light received from the outside, in various directions, and reflected light reliably reaches fish eaters. This enables an attracting effect to be significantly enhanced.

Note that in the respective aspects described above, the reflecting member 4 to be swung may include a plurality of reflecting portions. In this case, the reflecting member 4 can be supported by one or more support members 3. By doing this, the plurality of swinging portions of the reflecting member 4 can reflect light received from the outside, in various directions. Therefore, reflected light reliably reaches fish eaters. This enables an attracting effect to be significantly enhanced.

In addition, the reflecting member 4 that is provided on the outer face or inner face of the main body portion 2 may be disposed to have a clearance. Therefore, external light may enter an inside of the main body portion 2 from the clearance, and the external light that has entered as described above may be reflected to another reflecting member 4 that is disposed in the main body portion 2. By doing this, the plurality of swinging portions of the reflecting member 4 can reflect light received from the outside, in various directions. Therefore, reflected light reliably reaches fish eaters. This enables an attracting effect to be significantly enhanced.

In addition, a lure for fishing according to another embodiment of the present invention is formed by using resin (for example, ABS, acryl, or the like) or metal (for example, zinc, lead, tungsten, or the like). A plurality of reflecting surfaces or reflectors that can specularly reflect light from the outside is provided on an outer face of the lure, and the light from the outside is specularly reflected plural times. Further, the lure for fishing according to the other embodiment of the present invention may be formed by using a material that is different from the resin or metal described above. Furthermore, the lure for fishing according to the other embodiment of the present invention is a jig, a Tenya, or a spoon. Herein, it is to be noted that the lure includes the jig, the Tenya, and the spoon. If a reflecting surface or a reflector that specularly reflects light that enters an outer face from many directions is appropriately provided on the outer face, as described above, reflected light reliably reaches fish eaters even by using the jig, the Tenya, or the spoon. Therefore, an attracting effect can be significantly enhanced. In addition, the lure for fishing according to the other embodiment of the present invention may be formed to be solid. In this case, the lure is formed to not include a cavity part inside. Alternatively, the lure for fishing according to the other embodiment of the present invention may be provided with a cavity part in at least a portion of the lure.

Next, a method for forming a reflecting surface that performs specular reflection of the one or more reflecting surfaces 6 or reflectors 7 in the lure 1 for fishing according to the embodiment of the present invention is described. Conceivable examples of the method for forming the reflecting surface that performs specular reflection include resin injection molding, molding of metal, glass, or the like, additive molding of a very thin coating film, formation of a coating film on a surface of a metal/resin mold, and the like, and another conventionally known technology can also be used. By using the method described above, a specular reflecting surface can be formed directly on an inner face or an outer face of a bod of a lure, or a specular reflection (reflecting) surface member can be formed in a cavity part of the lure to adhere to the main body portion.

In addition, whether a reflecting surface to be formed performs specular reflection or diffuse reflection depends on surface roughness, a material, or the like of the reflecting surface to be formed. A specular reflecting surface of the one or more reflecting surfaces 6 or reflectors 7 in the lure 1 for fishing according to the embodiment of the present invention can be formed by determining a material and surface roughness that enable reflection having a luminance that is 40% or more of a luminance in ideal specular reflection, and using the forming method described above. For example, in the case of resin injection molding, in particular, the surface roughness of a mold surface gives influence. However, a difference in molding material (for example, ABS that is frequently used for a lure has a great surface roughness in comparison with acryl) also significantly affects formation of a specular surface. Even in such a case, a specular surface is thinly coated with a transparent paint, and therefore an influence of surface roughness can be reduced.

Here, JP H09-154438 A discloses an example of diffuse reflection that serves as a color-developing lure, and the following physical or technical features are provided as a method for causing specular reflection light of a lure to develop color. Reflected light that has been reflected by a certain object absorbs a specified wavelength from the object, and contains a large amount of specified wavelength component, and therefore color is developed. In diffuse reflection light in the case of diffuse reflection, a certain color of a surface of the object is absorbed in the object (referred to as "light absorption"), and irregular reflection is performed, and therefore the color is "developed" in the reflected light. On the other hand, in specular reflection light in the case of specular reflection, regular reflection is reflection of a mirror in which light is emitted in a direction of an angle of reflection that is equal to an angle of incidence, and is different from irregular reflection in which light is also emitted to be diffused in a direction that is different from the angle of reflection. Therefore, it can be said that a certain color of the surface of the object is not basically "developed". In other words, in a case where reflected light appears to be colored in a color of the surface of the object, this indicates that the color has been absorbed in the reflected light and irregular reflection has been performed, and it can be said that specular reflection has not been performed. However, in the case of a lure main body that has been formed by coloring transparent resin to be similar to red glass like stained glass, and in the case of transmitted light that is transmitted through this lure main body (rather than reflected light that is reflected by this lure main body), in incident light from the outside (for example, white incident light) or light reflected to the outside, only red light becomes transmitted light, and as a result, light that is not red is absorbed during transmission through the lure main body, as described above. Therefore, it is to be noted that a method for causing specularly reflected light to develop color can be achieved by applying a fact that only red light becomes transmitted light, and as a result, red light (colored light) is formed.

As described above, external light is made incident from various directions, and a principal conceivable example of the external light is sunlight that arrives underwater from above the surface of the water. Such external light (incident light) is made incident in an upward/downward (vertical) direction or in an oblique direction from above the surface of the water toward a lure in the water. In a lure according to the invention of the present application, such external light (incident light) is specularly reflected at a luminance of reflected light that is higher than a luminance in normal diffuse reflection (in the case of irregular reflection), for example, in a roughly leftward/rightward (lateral) direction or an oblique lateral direction of the lure. Therefore, the strength of reflected light that is reflected by the lure (an object) can be significantly increased, and this enables reflected light to be transmitted far away. In addition, a color that fish like can be developed by causing the reflected light to be transmitted through a colored translucent resin main body (a body), as needed. It has been discovered that the lure according to the invention of the present application can more accurately and reliably attract fish eaters.

Dimensions, a material, and disposition of each component described herein are not limited to dimensions, a material, and disposition that have been explicitly described in the embodiments, and variations can be made to these respective components in such a way that these respective components have arbitrary dimensions, material, and disposition that can be included in the scope of the present invention. In addition, a component that has not been explicitly described herein can be added to the described embodiments, or some of the components described in each of the embodiments can be omitted.

### REFERENCE SIGNS LIST

- 1: Lure
- 2: Main body portion (main body)
- 3: Support member
- 4: Reflecting member
- 5: Support receiving part
- 6: Reflecting surface
- 7: Reflector
- 11: Cavity
- 13: End
- 17: Spring member

## Claims

1. A lure for fishing comprising: a body that includes a cavity inside the body,
wherein a portion or an entirety of the cavity is visible from outside, and
a plurality of reflecting surfaces or a plurality of reflectors that specularly reflects light from the outside is provided on at least any of an outer face of the body, an inner face of the body, and an inside of the cavity, and the light from the outside is specularly reflected plural times.

2. The lure according to claim 1, wherein each of the plurality of reflecting surfaces is formed in a circular shape, a polygonal shape, an arc shape, or a scaly shape.

3. The lure according to claim 1, wherein at least some of the plurality of reflectors are formed in a cylindrical shape, a wave shape, a polygonal shape, a polyhedral shape, a spherical shape, or a tile shape.

4. The lure according to any one of claims 1 to 3, wherein in a case where the plurality of reflecting surfaces or the plurality of reflectors is provided on the inside of the cavity, one or more of the plurality of reflecting surfaces or the plurality of reflectors are directly or indirectly supported by a portion of the body.

5. The lure according to any one of claims 1 to 3, wherein the plurality of reflecting surfaces or the plurality of reflectors is formed integrally with the body.

6. The lure according to any one of claims 1 to 5, wherein the body is formed to diffuse and transmit the light from the outside.

7. The lure according to claim 6, wherein the light from the outside or reflected light to the outside develops color at a time of transmission through the body.

8. The lure according to any one of claims 1 to 7, wherein in a case where the plurality of reflecting surfaces or the plurality of reflectors is provided on the inner face of the body, one or more of the plurality of reflecting surfaces or the plurality of reflectors are formed by using vapor deposition coating, a holographic film, a hologram sheet, metal adhesion, resin adhesion, or glass-sheet adhesion.

9. The lure according to any one of claims 1 to 8, wherein the body is formed by using resin or metal.

10. The lure according to any one of claims 1 to 9, wherein in a case where the plurality of reflecting surfaces or the plurality of reflectors is provided, each of the plurality of reflecting surfaces or the plurality of reflectors has an identical shape or a different shape.

11. The lure according to claim 4, wherein in a case where the plurality of reflecting surfaces or the plurality of reflectors is provided on the inside of the cavity, a reflecting member including the plurality of reflecting surfaces or the plurality of reflectors is provided, the reflecting member is supported by a support member in which one end is supported by the portion of the body, and the support member supports the reflecting member in a center position of the reflecting member or in a position that deviates from the center position, when viewed in a cross section that is perpendicular to a direction in which the reflecting member extends.

12. The lure according to claim 4, wherein in a case where the plurality of reflecting surfaces or the plurality of reflectors is provided on the inside of the cavity, a reflecting member including the plurality of reflecting surfaces or the plurality of reflectors is provided, the reflecting member is supported by a support member in which one end is supported by the portion of the body, and the reflecting member is supported by the support member by using a ball bearing or a spring member.

13. A lure for fishing, wherein
a plurality of reflecting surfaces or a plurality of reflectors that specularly reflects light from an outside is provided on an outer face of the lure, and the light from the outside is specularly reflected plural times.

14. The lure according to claim 13, wherein the lure is formed by using resin or metal.

15. The lure according to claim 13 or 14, wherein the lure is formed to be solid.
